Europäisches Patentamt

European Patent Office

Office européen des brevets

(19)

(11) Veröffentlichungsnummer: **0 227 081 B1**

## EUROPÄISCHE PATENTSCHRIFT

(45) Veröffentlichungstag der Patentschrift: **02.05.91**

(51) Int. Cl.⁵: **C02F 3/04**, C02F 3/26

(21) Anmeldenummer: **86117841.6**

(22) Anmeldetag: **20.12.86**

(54) **Verfahren und Vorrichtung zur biologischen Reinigung von Wasser, vorzugsweise vorgeklärtem Abwasser.**

(30) Priorität: **21.12.85 DE 3545672**

(43) Veröffentlichungstag der Anmeldung:
**01.07.87 Patentblatt 87/27**

(45) Bekanntmachung des Hinweises auf die
Patenterteilung:
**02.05.91 Patentblatt 91/18**

(84) Benannte Vertragsstaaten:
**AT BE CH DE ES FR GB IT LI NL**

(56) Entgegenhaltungen:
CH-A- 267 965
DE-A- 2 824 446
DE-A- 3 123 155
FR-A- 2 390 192
NL-C- 90 695

(73) Patentinhaber: **IWTS Consulting Engineers
GmbH
Verdistrasse 2
W-6200 Wiesbaden(DE)**

(72) Erfinder: **Klein, Hans-Ulrich, Dipl.-Ing.
Verdistrasse 2
W-6200 Wiesbaden(DE)**
Erfinder: **Kratzenstein, Klaus, Dipl.-Ing.**

**W-5830 Schwelm(DE)**

(74) Vertreter: **Blumbach Weser Bergen Kramer
Zwirner Hoffmann Patentanwälte
Sonnenberger Strasse 100
W-6200 Wiesbaden 1(DE)**

EP 0 227 081 B1

Rank Xerox (UK) Business Services

## Beschreibung

Die Erfindung betrifft ein Verfahren zur biologischen Reinigung von Wasser, vorzugweise vorgeklärtem Abwasser, bei dem das aufzubereitende Wasser mit reinem Sauerstoff in einem Tropfkörper in Kontakt gebracht und anschließend nachgeklärt und/oder gefiltert wird.

Bei der Reinigung kommunaler und/oder industrieller Abwässer ist es bekannt, zunächst ein Sammel- und Vorklärbecken vorzusehen und diesen eine konventionelle biologische Reinigungsstufe nachzuschalten. Eine derartige biologische Reinigungsstufe besteht zum Beispiel aus einer Belebtschlammanlage, der Luft oder Sauerstoff zugeführt wird. Entsprechend dem Partialdruck in der Luft erfolgt eine Anreicherung des Wassers mit Sauerstoff, und im Laufe der Zeit siedeln sich an der Grenzfläche, welche die festen Stoffe mit Wasser und Luft bilden, Mikroorganismen an. Diese treten mit in dem Abwasser gelösten und auch dispergierten Substanzen in Wechselwirkung. Nach dieser biologischen Reinigungsstufe wird anschließend ein Nachklärbecken mit einem Schlammräumer vorgesehen. Daraus wird deutlich, daß herkömmliche Anlagen zur Reinigung von Abwässern einen großen apparativen Aufwand erfordern, räumlich sehr ausgedehnt sind und der Betrieb und die damit verbundene Wartung einen nicht unbeträchtlichen Aufwand, auch in personeller Hinsicht, erfordern.

Nach der niederländischen Patentschrift 90695 ist es bekannt, Luft zwischen einem Oxidationfeld einem Nachfeld zuzuführen, wobei die Oxidation auch dort noch fortgesetzt werden soll. Dabei ist das erste Filter als Trockenfilter bezeichnet. Für einen erhöhten Sauerstoffbedarf ist die Zuführung von reinem Sauerstoff mit einer Druckregelung nicht vorgesehen.

Die schweizerische Patentschrift 267 965 betrifft einen einstufigen Tropfkörper bei dem Luft entsprechend dem Bedarf zugeführt wird. Nach der französischen Patentschrift 2 390 192 ist es bekannt auch reinen Sauerstoff zuzuführen. Diese Zufuhr erfolgt jedoch zu einem einstufigen Naßfilter, ohne eine Oxidation in einer zweiten Filterstufe und eine entsprechende Messung mit Regelung vor einem Nachfilter vorzusehen. Der vorliegenden Erfindung liegt die Aufgabe zugrunde, ein neuartiges Verfahren verfügbar zu machen, das eine wesentliche Reduzierung des apparativen Aufwandes ermöglicht und bei dem eine optimale Ausnutzung des zugeführten Sauerstoffs gewährleistet ist.

Erfindungsgemäß wird das bei einem Verfahren der eingangs genannten Art dadurch erreicht, daß das Sauerstoffangebot in einem geschlossenen Tropfkörper unter Druck einerseits entsprechend dem biochemischen Sauerstoffbedarf des stromabwärts fließenden Wassers und andererseits zur Fortsetzung einer biologischen Feinreinigung in der Weise gesteuert wird, daß sowohl das Sauerstoffangebot im Gasraum des Tropfkörpers trotz laufender Zehrung durch Niveauregulierung konstant gehalten, als auch mit Hilfe von Messung des gelösten Sauerstoffs im Wasser der Betriebsdruck im Gasraum und damit de Sauerstofflöslichkeit im Wasser durch Druckregelung so angepaßt werden, daß trotz des biologischen Bedarfs in dem Wasser hinter dem Tropfkörper ausreichend gelöster Sauerstoff als Depot für die biologische Feinreinigung in der Filterstufe zur Verfügung steht.

Die Erfindung macht gleichermaßen eine Vorrichtung zur Durchführung des Verfahrens verfügbar. Diese zeichnet sich dadurch aus, daß ein erster Druckraum vorgesehen ist, in dem sich ein Tropfkörper befindet, den von oben nach unten das zu behandelnde Wasser durchrieselt, daß dem ersten Druckraum ein zweiter Druckraum zugeordnet ist, in dem sich ein Filter befindet, dessen Filtermaterial ein spezifisches Gewicht von < 1 aufweist und an der Oberseite durch einen Düsenboen begrenzt ist, wobei das zu behandelnde Wasser das Filter von unten nach oben durchfließt, daß eine Verbindung zwischen den Unterseiten des ersten Druckraums,(Tropfkörperraum) und des zweiten Druckraums (Aufwärtssfilterraum), vorgesehen ist, daß am Tropfkörperraum eine oben einmündende Abwasserzuführleitung und eine Gas zuführleitung vorgesehen ist, und daß am Aufwärtsfilterraum oberhalb des oberen Bodens eine Reinwasserentnahmeleitung angebracht ist, daß an der Reinwasserabgabeleitung ein Druckhalteregelventil vorgesehen ist, welches in Abhängigkeit einer kontinuierlichen Restsauerstoffmessung im Reinwasser (12) betätigbar ist, und daß ein Belüfter in Abhängigkeit vom Wasserspiegel im Tropfkörperraum automatisch die Gas- bzw. Sauerstoffzufuhr regelt. In vorteilhafter Weise mündet dabei die Luft- oder $O_2$-Zuführungsleitung an der Oberseite des Tropfkörperraumes ein. Zweckmäßig umgibt der Aufwärtsfilterraum als Ringraum konzentrisch den Tropfkörperraum. Dabei sind vorteilhafterweise im unteren Bereich Verbindungsöffnungen in der Wand zwischen Tropfkörperraum und Aufwärtsfilterraum vorgesehen, der Tropfkörperraum verläuft an seiner Unterseite sich kegelförmig verjüngend aus und ist an der Spitze mit einer Schlammabführöffnung mit Ventil versehen. Für eine gute Verteilung des Abwassers ist an der Einmündung der Abwasserleitung an der Oberseite des Tropfkörperraums eine Verregnungsdüse vorgesehen, die das Abwasser über den gesamten Querschnitt des Drucktropfkörpers verteilt.

Eine andere vorteilhafte Ausführungsform der Erfindung besteht darin, daß der Tropfkörperraum und der Aufwärtsfilterraum aus zwei nebeneinander angeordneten Kolonnen besteht, die an der Bodenseite mit einer Verbindungsleitung verbunden sind. Dabei kann in zweckmäßiger Weise der Tropfkörperraum mittig angeordnet von einer Vielzahl von Aufwärtsfilterkolonnen umgeben sein. Auch besteht eine zweckmäßige Möglichkeit darin, den Aufwärtsfilterkolonnen einen Druckkessel zuzuordnen, der über eine oberseitige Leitung mit den Aufwärtsfilterkolonnen in Verbindung steht. Mit Vorteil ist in der Mitte des sich verjüngenden Bodens von den Aufwärtsfilterkolonnen eine Schlammentnahmeöffnung vorgesehen.

Gemäß einer vorteilhaften Ausführungsform der erfindungsgemäßen Vorrichtung ist vorgesehen, daß an der Oberseite des Tropfkörpers ein Abgasventil vorgesehen ist, das über eine Zeitschaltung öffnet, wobei die Rohwasserzuführungs-und Sauerstoffzuführungsventile geschlossen werden. Dabei ist weiter mit Vorteil eine Zeitschalteinrichtung vorgesehen, die ein Schlammabführungsventil auf der Unterseite des Tropfkörpers in Intervallen öffnet.

In zweckmäßiger Weise kann eine Druckschaltung zum Öffnen des Abgasventils vorgesehen sein.

Eine Fortbildung der Erfindung besteht darin, daß das vorgeschaltete Sammel- oder Vorklärbekken als Hochbehälter ausgebildet ist und der hierdurch gegebene statische Vordruck dem Systemdruck der Vorrichtung entspricht.

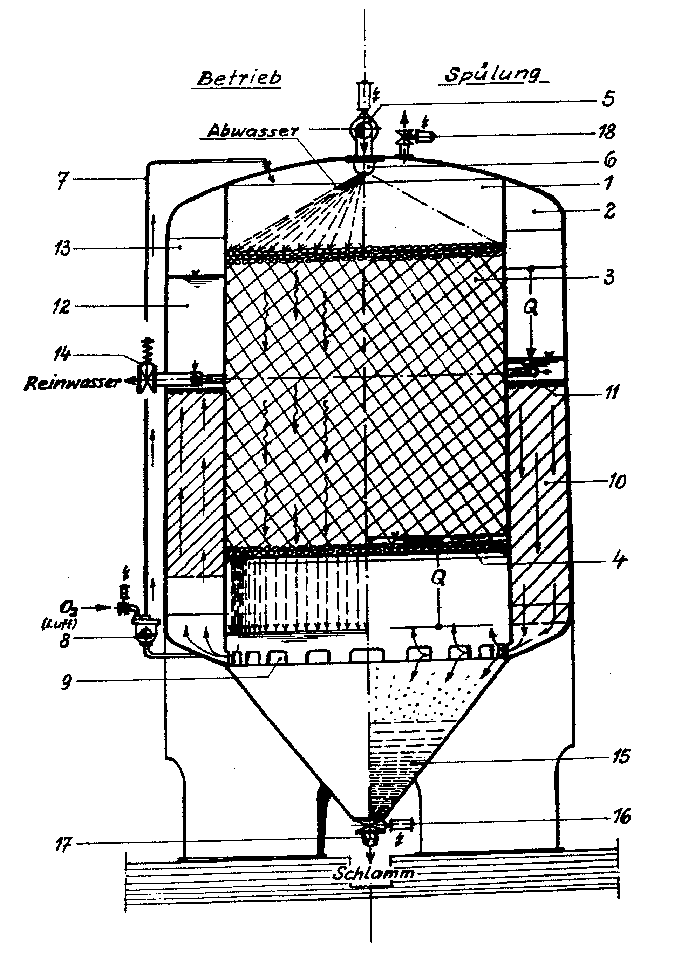

Die Erfindung soll unter Bezugnahme auf die beigefügte Figur an einem Ausführungsbeispiel erläutert werden.

Die in der Figur dargestellte Vorrichtung zur biologischen Reinigung von Wasser besteht aus einem mittig angeordneten Tropfkörperraum, der als Druckbehälter ausgebildet ist und von einem ringförmigen Aufwärtsfilterraum 2 konzentrisch umgeben wird. Der Tropfkörperraum 1 ist mit einer Füllung 3 versehen, die aus einer gebrochenen und sortierten Lava mit einer Körnung von etwa 20 mm besteht und auf einem gelochten Tragboden 4 ruht. Eine Abwasserzuführleitung 5 endet in einer Vollkegeldüse 6, durch die das vorgeklärte Abwasser gleichmäßig auf die Tropfkörperfüllung 3 verregnet wird. In der Figur stellt die linke Hälfte den Betriebszustand dar, während die rechte Hälfte den später noch zu beschreibenden Spülvorgang illustriert. Neben dem verregneten, vorgeklärten Abwasser gelangt in den oberen Raum des Tropfkörpers 1 Sauerstoff durch eine Sauerstoffzuführleitung 7 und bildet ein Gaspolster, das sich nach unten ausdehnt, bis der Wasserspiegel unter dem Lochboden mit dem Schwimmerventil des Belüfters 8 harmoniert.

Auf der gesamten Oberfläche der Füllung 3, bestehend aus dem porösen Lavagranulat, bilden die durch die biologische Reaktion des Sauerstoffs mit den organischen Substanzen des Wassers entstandenen Mikroorganismen eine Bakterienflora, den sogenannten biologischen Rasen. Durch die Füllung 3 des Tropfkörperraums 1 rieselt das Wasser und gelangt am Boden durch Öffnungen 9 in den unteren Bereich des Aufwärtsfilterraumes, durchströmt das Aufwärtsfilter 10 und sammelt sich über dem das Aufwärtsfilter 10 oben begrenzenden Düsenboden 11 als Reinwasser 12 an. Über dem Reinwasser 12 bildet sich ein Luftpolster 13, und über ein Reinwasserentnahmeventil 14 kann das Reinwasser 12 aus der Vorrichtung entnommen werden.

Der Gasdruck im Tropfkörperraum 1 ergibt sich aus der Summe von Luftpolsterdruck über dem Reinwasserspiegel des Aufwärtsfilters 10 und dem Niveauunterschied zwischen dem Wasserspiegel im Tropfkörperraum 1 und dem des Reinwassers zuzüglich Filterwiderstand und beträgt bei der beschriebenen Vorrichtung beispielsweise 2,0 bar. Das Reinwasserentnahmeventil 14 ist als Druckhalteventil ausgebildet, und dieses regelt den Reinwasserablauf, soweit keine Nachbehandlungsanlage zur Trink- und Brauchwasserbereitung den Vordruck nutzt.

Bei einem Sauerstoffgasdruck von 2,0 bar und einer Temperatur von 15° C lösen sich echt im Wasser 145 mg/l Sauerstoff. Dieses hohe Sauerstoffangebot beschleunigt den biologischen Abbau und führt dazu, daß das unter Druck stehende Wasser nach der Tropfkörperstufe 3 ein Sauerstoffdepot in das Aufwärtsfilter 10 transportiert. Die Sauerstoff-Nettozehrung im Tropfkörperraum 1 entspricht nahezu dem biochemischen Sauerstoffbedarf des Abwassers. Diese Sauerstoffmenge wird über den Belüfter 8 vom Verdampfer einer Flüssigkeitssauerstoffanlage vollautomatisch dem Tropfkörperraum zugeführt.

Die inaktiven Bestandteile des biologischen Rasens werden vom herabrieselnden Wasser mitgerissen und sedimentieren in einem Schlammeindikker 15 oder werden im Aufsatzfilter 10 zurückgehalten. In dem Aufsatzfilter 10 findet eine biologische Feinreinigung statt, wobei sich auf dem feinporösen Schaumstoffgranulat des Aufwärtsfilters 10 ein filmartiger Rasen ausbildet, der vom Sauerstoffüberschuß des zu filtrierenden Wassers lebt.

Der Schlammeindicker 15 verjüngt sich nach unten kegelförmig und besitzt an seiner Spitze eine Schlammabführöffnung mit einem Schlammabführventil 16, an dem eine Schlammabführleitung 17 anschließt.

Eine Reihe weiterer Einrichtungen ermöglicht einen vollautomatischen Betrieb der Vorrichtung. An der Oberseite des Tropfkörperraumes ist ein Abgasventil 18 vorgesehen, das mit einer Druckschaltung versehen ist. Das Abgasventil 18 ist ebenso wie der Belüfter 8 und das Schlammabführventil 16 mit einer elektrischen Betätigungseinrichtung versehen. Das Druckhalteregelventil 14 an der Reinwasserabgabeleitung spricht auf eine kontinuierliche Restsauerstoffmessung im Reinwasser 12 an. Auf diese Weise ist neben dem Betrieb der auf der rechten Seite der beigefügten Figur dargestellte Spülvorgang möglich. Dabei steigt mit zunehmender Verschlammung der Filterwiderstand und hebt den Gaspolsterdruck im Tropfkörperraum 1 an. Mittels Druck- und/oder Zeitschaltung wird der Spülvorgang wie folgt ausgelöst: Das Rohwasserventil 5, das ebenfalls eine elektrische Betätigungseinrichtung besitzt, sowie das Sauerstoffventil 8 werden geschlossen, während das Reinwasserdruckhalteventil 14 ebenfalls geschlossen bleibt. Das obere Abgasventil 18 wird geöffnet, wobei ein Mischgas aus Sauerstoff, Kohlendioxid, Stickstoff und anderen gasförmigen Reaktionsprodukten austritt. Gleichzeitig dehnt sich das Luftpolster 13 über dem sinkenden Reinwasserspiegel aus, wodurch der Filter 10 stoßartig gespült wird, und der Wasserspiegel im Tropfkörperraum 1 steigt um den Betrag Q an, während der Spiegel des Reinwassers 12 um den Betrag Q absinkt. Der Schlamm sammelt sich in dem Eindicker 15. Nach etwa 60 bis 90 sec schließt das Abgasventil 18; das Abwasserventil 5 und das Sauerstoffventil 8 werden geöffnet. Die Gaspolster im Tropfkörperraum und im Aufwärtsfilterraum werden verdichtet, und die Vorrichtung arbeitet in der bereits beschreibenen Weise gemäß der linken Seite in der Darstellung. Die Schlammabführung erfolgt nach einer besonderen Zeitschaltung unter Berücksichtigung der Eindickzeit durch entsprechendes Öffnen des Schlammabführventils 16.

Neben der dargestellten konstruktiven Anordnung ist es auch möglich, daß der Tropfkörperraum 1 und der Aufwärtsfilterraum 2 aus zwei nebeneinander angeordneten Kolonnen besteht, die an der Bodenseite mit einer Verbindungsleitung verbunden sind. Auch ist es möglich, daß ein mittig angeordneter Tropfkörperraum 1 von einer Vielzahl von Aufwärtsfilterräumen 2 in Form von Aufwärtsfilterkolonnen umgeben ist. Den Aufwärtsfilterkolonnen kann dabei ein gesonderter Druckkessel zugeordnet sein, der über eine oberseitige Leitung mit den Aufwärtsfilterkolonnen in Verbindung steht. Die Aufwärtsfilterkolonnen weisen eine Schlammentnahmeöffnung in der Mitte ihres sich verjüngenden Bodens auf. Im übrigen ist bei dieser getrennten Anordnung von Tropfkörperraum und Aufwärtsfilterraum die Betreibsweise die gleiche.

Damit macht die Erfindung eine Vorrichtung verfügbar, die eine biologische Reinigungsstufe und das Nachklärbecken herkömmlicher Abwasserreinigungsanlagen ersetzt und eine kompakte Bauweise ermöglicht, die ohne Schwierigkeiten transportfähig ist und im Baukastensystem beliebig vervielfacht werden kann. Wasserverluste treten nur insoweit auf, als der abzuziehende Schlamm Wasser enthält, und Sauerstoffverluste entstehen nur beim Spülstoß zur gleichzeitigen Abführung unerwünschter Gase.

Der Sauerstoffverbrauch wird vollautomatisch reguliert, und das Aufwärtsfilter übernimmt nicht nur die Funktion des Nachklärbeckens, sondern ermöglicht eine biologische Feinreinigung unter Nutzung des im Wasser überschüssig gelösten Sauerstoffs.

Durch einfache Nachschaltung einer weiteren Aufbereitungsstufe und Desinfektion kann Trink- und Brauchwasserqualität erzielt werden. Dabei ist das Verfahren und der gesamte Betrieb der Vorrichtung extrem umweltfreundlich.

Da der Betrieb der Vorrichtung vollautomatisch von Druck- und Zeitschaltungen bewerkstelligt wird, beschränkt sich die Bedienung auf die Überwachung und Kontrolle der Anzeigeinstrumente. Die Wartung ist auf den Betrieb der Ventile beschränkt.

**Ansprüche**

1. Verfahren zur biologischen Reinigung von Wasser, vorzugsweise vorgeklärtem Abwasser, bei dem das aufzubereitende Wasser mit reinem Sauerstoff in einem Tropfkörper in Kontakt gebracht und anschließend nachgeklärt und/oder gefiltert wird,

   dadurch gekennzeichnet,

   daß das Sauerstoffangebot in einem geschlossenen Tropfkörper unter Druck einerseits entsprechend dem biochemischen Sauerstoffbedarf des stromabwärts fließenden Wassers und andererseits zur Fortsetzung einer biologischen Feinreinigung in der Weise gesteuert wird, daß sowohl das Sauerstoffangebot im Gasraum des Tropfkörpers trotz laufender Zehrung durch Niveauregulierung konstant gehalten, als auch mit Hilfe von Messung des gelösten Sauerstoffs im Wasser der Betriebsdruck im Gasraum und damit die Sauerstofflöslichkeit im Wasser durch Druckregelung so angepaßt werden, daß trotz des biologischen Bedarfs in dem Wasser hinter dem Tropfkörper ausreichend gelöster Sauerstoff als Depot für die biologische Feinreinigung in der Filterstufe zur Verfügung steht.

2. Vorrichtung zur Dürchführung des Verfahrens nach Anspruch 1,

   dadurch gekennzeichnet,

   daß ein erster Druckraum (1) vorgesehen ist, in dem sich ein Tropfkörper (3) befindet, den von oben nach unten das zu behandelnde Wasser durchrieselt,

daß dem ersten Druckraum (1) ein zweiter Druckraum (2) zugeordnet ist, in dem sich ein Filter (10) befindet, dessen Filtermaterial ein spezifisches Gewicht von < 1 aufweist und an der Oberseite durch einen Düsenboden (11) begrenzt ist, wobei das zu behandelnde Wasser das Filter (10) von unten nach oben durchfließt,

daß eine Verbindung (9) zwischen den Unterseiten des ersten Druckraums, (Tropfkörperraum), (1) und des zweiten Druckraums, (Aufwärtsfilterraum), (2) vorgesehen ist,

daß am Tropfkörperraum (1) eine oben einmündende Abwasserzuführleitg (5) und eine Gaszuführleitung (7) vorgesehen ist,

daß am Aufwärtsfilterraum (2) oberhalb des oberen Bodens (11) eine Reinwasserentnahmeleitung (14) angebracht ist,

daß an der Reinwasserabgabeleitung ein Druckhalteregelventil (14) vorgesehen ist, welches in Abhängigkeit einer kontinuierlichen Restsauerstoffmessung im Reinwasser (12) betätigbar ist, und

daß ein Belüfter (8) in Abhängigkeit vom Wasserspiegel im Tropfkörperraum (1) automatisch die Gas- bzw. Sauerstoffzufuhr regelt.

3. Vorrichtung nach Anspruch 2,
   dadurch gekennzeichnet,
   daß die Luft- oder Sauerstoffzuführungsleitung (7) an der Oberseite des Tropfkörperraumes (1) einmündet.

4. Vorrichtung nach Anspruch 2 oder 3,
   dadurch gekennzeichnet,
   daß der Aufwärtsfilterraum (2) als Ringraum konzentrisch den Tropfkörperraum (1) umgibt.

5. Vorrichtung nach einem der Ansprüche 2 bis 4,
   dadurch gekennzeichnet,
   daß im unteren Bereich Verbindungsöffnungen (9) in der Wand zwischen Tropfkörperraum (1) und Aufwärtsfilterraum (2) vorgesehen sind.

6. Vorrichtung nach einem der Ansprüche 2 bis 5,
   dadurch gekennzeichnet,
   daß der Tropfkörperraum (1) an seiner Unterseite sich kegelförmig verjüngend (15) ausläuft und an der Spitze mit einer Schlammabführöffnung mit Schlammabführventil (16) versehen ist.

7. Vorrichtung nach einem der Ansprüche 2 bis 6,
   dadurch gekennzeichnet,

daß an der Einmündung der Abwasserleitung (5) an der Oberseite des Tropfkörperraumes (1) eine Verregnungsdüse (6) vorgesehen ist, die das Abwasser über den gesamten Querschnitt des Tropfkörperraumes (1) verteilt.

8. Vorrichtung nach Anspruch 2 oder 3,
   dadurch gekennzeichnet,
   daß der Tropfkörperraum (1) und der Aufwärtsfilterraum (2) aus zwei nebeneinander angeordneten Kolonnen besteht, die an der Bodenseite mit einer Verbindungsleitung verbunden sind.

9. Vorrichtung nach einem der Ansprüche 2, 3 und 8,
   dadurch gekennzeichnet,
   daß ein mittig angeordneter Tropfkörperraum von einer Vielzahl von Aufwärtsfilterkolonnen umgeben ist.

10. Vorrichtung nach einem der Ansprüche 2, 3, 8 und 9,
    dadurch gekennzeichnet,
    daß den Aufwärtsfilterkolonnen ein Druckkessel zugeordnet ist, der über eine oberseitige Leitung mit den Aufwärtsfilterkolonnen in Verbindung steht.

11. Vorrichtung nach einem der Ansprüche 2, 3 und 8 bis 10,
    dadurch gekennzeichnet,
    daß in der Mitte des sich verjüngenden Bodens von den Aufwärtsfilterkolonnen eine Schlammentnahmeöffnung vorgesehen ist.

12. Vorrichtung nach einem der Ansprüche 2 bis 11,
    dadurch gekennzeichnet,
    daß an der Oberseite des Tropfkörpers (1) ein Abgasventil (18) vorgesehen ist, das über eine Zeitschaltung öffnet, wobei die Rohwasserzuführungs- (5) und Sauerstoffzuführungsventile (8) geschlossen werden.

13. Vorrichtung nach einem der Ansprüche 2 bis 12,
    dadurch gekennzeichnet,
    daß eine Zeitschaltungseinrichtung ein Schlammabführventil (16) auf der Unterseite des Tropfkörpers (1) in Intervallen öffnet.

14. Vorrichtung nach einem der Ansprüche 2 bis 13,
    dadurch gekennzeichnet,
    daß zum Öffnen des Abgasventils (18) eine Druckschaltung vorgesehen ist.

15. Vorrichtung nach einem der Ansprüche 2 bis 14,

dadurch gekennzeichnet,

daß ein vorgeschaltetes Sammel- oder Vorklärbecken als Hochbehälter ausgebildet ist und der hierdurch gegebene statische Vordruck dem Systemdruck der Vorrichtung entspricht.

## Claims

1. A process for the biological purification of water, preferably preclarified effluent, water which it is required to treat being brought into contact with pure oxygen in a percolating filter, then given secondary clarification and/or filtering, characterised in that the oxygen feed is so controlled in a closed pressurized percolating filter in dependence upon the biochemical oxygen demand of the downstream water and in order to continue a biological fine purification that the oxygen feed in the gas chamber of the percolating filter is maintained constant by level control despite continuous consumption and, through the agency of measurement of the dissolved oxygen in the water, the operating pressure in the gas chamber and therefore the oxygen solubility in the water are so adapted by pressure control that despite the biological demand in the water after the percolating filter sufficiently dissolved oxygen is available as a store or stock for biological fine purification in the filter stage.

2. An apparatus for the practice of the process according to claim 1, characterised in that a first pressure chamber (1) is provided in which a percolating filter (3) is disposed and the water for treatment trickles down therethrough, a second pressure chamber (2) is associated with the first pressure chamber (1) and has in it a filter (10) whose filter material has a specific weight of < 1 and which is bounded at the top by a nozzle tray (11), the water for treatment flowing upwards through the filter (10), a communication (9) is provided between the bottom ends of the first pressure chamber (percolating filter chamber) (1) and of the second pressure chamber (rising filter chamber) (2), a top entry effluent feed line (5) and a gas feed line (7) are provided on the percolating filter chamber (1), a pure water removal line (14) is disposed on the rising filter chamber (2) above the top nozzle tray (11), a pressure-maintaining control valve (14) is provided in the pure water delivery line and is adapted to operate in dependence upon a continuous measurement of residual oxygen in the pure water (12), and a fan (8) controls the gas or oxygen feed automatically in dependence upon the water level in the percolating filter chamber (1).

3. An apparatus according to claim 2, characterised in that the air or oxygen feed line (7) enters the percolating filter chamber (1) at the top.

4. An apparatus according to claim 2 or 3, characterised in that the rising filter chamber (2) extends concentrically around the percolating filter chamber (1) as an annular chamber.

5. An apparatus according to any of claims 2 to 4, characterised in that bottom communicating apertures (9) are present in the wall between the percolating filter chamber (1) and the rising filter chamber (2).

6. An apparatus according to any of claims 2 to 5, characterised in that the percolating filter chamber (1) has a conically narrowing termination (15) at its bottom end and has at the apex a sludge discharge aperture and sludge discharge valve (16).

7. An apparatus according to any of claims 2 to 6, characterised in that a spray irrigation nozzle (6) is provided at the top entry of the effluent line (5) on the percolating filter chamber (1) and distributes the effluent over the entire cross-section of the latter chamber (1).

8. An apparatus according to claim 2 or 3, characterized in that the percolating filter chamber (1) and the rising filter chamber (2) take the form of two adjacent columns connected at their bases to a connecting line.

9. An apparatus according to any of claims 2, 3 and 8, characterized in that a number of rising filter columns extend around a central percolating filter chamber.

10. An apparatus according to any of claims 2, 3, 8 and 9, characterized in that a pressure vessel is associated with the rising filter columns and communicates therewith by way of a top line.

11. An apparatus according to any of claims 2, 3 and 8 to 10, characterized in that a sludge removal aperture is present at the centre of the narrowing base of the rising filter columns.

**12.** An apparatus according to any of claims 2 to 11, characterized in that a waste gas valve (18) is provided at the top of the percolating filter (1) and is opened by a timing circuit arrangement, the raw water feed valve (5) and oxygen feed valve (8) closing.

**13.** An apparatus according to any of claims 2 to 12, characterized in that the timing device opens at intervals a sludge discharge valve (16) at the bottom of the percolating filter (1).

**14.** An apparatus according to any of claims 2 to 13, characterized in that a pressure circuit arrangement is provided to open the waste gas valve (18).

**15.** An apparatus according to any of claims 2 to 14, characterized in that a preceding storage basin or preclarification basin in devised as an elevated reservoir and the resulting hydrostatic pressure corresponds to the system pressure of the apparatus.


**Revendications**

**1.** Procédé pour l'épuration biologique d'eau, d'eau usée décantée notamment, dans lequel l'eau à traiter est amenée en contact avec de l'oxygène pur dans un lit bactérien, puis est décantée et/ou filtrée,
   caractérisé en ce que
   l'apport d'oxygène dans un lit bactérien fermé sous pression, correspondant d'une part au besoin biochimique en oxygène de l'eau coulant en aval et d'autre part à la poursuite d'une épuration biologique poussée, est commandé de manière que non seulement l'apport d'oxygène dans le compartiment de gaz du lit bactérien est, en dépit de la consommation continue, maintenu constant par une régulation de niveau, mais qu'encore la pression de régime dans le compartiment de gaz à l'aide de la mesure de l'oxygène dissous dans l'eau et par conséquent la solubilité de l'oxygène dans l'eau sont adaptées par une régulation de pression, de façon qu'en dépit du besoin biologique, il subsiste en dépôt dans l'eau suffisamment d'oxygène dissous pour l'épuration biologique poussée dans l'étage filtrant.

**2.** Dispositif pour la réalisation du procédé selon la revendication 1,
   caractérisé en ce qu'
   il est prévu un premier compartiment de pression (1), dans lequel se trouve un lit bactérien (3), à travers lequel l'eau à traiter ruisselle de haut en bas,
   en ce qu'au premier compartiment de pression (1) est associé un deuxième compartiment de pression (2), dans lequel se trouve un filtre (10), dont le matériau filtrant présente un poids spécifique < 1 et qui est limité à sa partie supérieure par un plateau à tuyères (11), l'eau à traiter coulant à travers le filtre (10) de bas en haut,
   en ce qu'une liaison (9) est prévue entre le fond du premier compartiment de pression (compartiment du lit bactérien (1)) et le deuxième (compartiment filtrant amont (2)),
   en ce qu'il est prévu dans le compartiment du lit bactérien (1) une conduite d'amenée d'eau usée (5) débouchant dans le haut du compartiment et une canalisation d'arrivée de gaz 7,
   en ce que dans le compartiment filtrant amont (2) et au-dessus du plateau supérieur (11) est disposée une conduite d'emport d'eau épurée (14),
   en ce qu'il est prévu sur la conduite d'emport d'eau épurée une soupape de régulation de maintien de pression (14), laquelle peut être actionnée en fonction d'une mesure permanente de l'oxygène restant dans l'eau épurée (12), et
   en ce qu'en fonction du niveau de l'eau dans le compartiment timent du lit bactérien (1) un aérateur (8) règle automatiquement l'apport de gaz et d'oxygène.

**3.** Dispositif selon la revendication 2,
   caractérisé en ce que
   la canalisation d'amenée d'air ou d'oxygène (7) débouche à la partie supérieure du compartiment du lit bactérien (1).

**4.** Dispositif selon la revendication 2 ou 3,
   caractérisé en ce que
   le compartiment filtrant amont (2) est un compartiment annulaire, qui entoure concentriquement le compartiment du lit bactérien (1).

**5.** Dispositif selon l'une des revendications 2 à 4,
   caractérisé en ce que
   des ouvertures de raccordement (9) sont prévues dans la zone inférieure de la paroi entre le compartiment du lit bactérien (1) et celui du filtre amont (2).

**6.** Dispositif selon l'une des revendications 2 à 5,
   caractérisé en ce que
   le compartiment du lit bactérien (1) se rétrécit coniquement (15) et est pourvu à son extrémité d'une ouverture d'évacuation de boue comportant une vanne (16).

7. Dispositif selon l'une des revendications 2 à 6, caractérisé en ce qu'

il est prévu dans la partie supérieure du compartiment du lit bactérien (1), là où débouche la conduite d'arrivée d'eau usée (5), une tuyère d'arrosage (6) qui répartit l'eau usée sur la totalité de la section transversale du compartiment du lit bactérien (1).

8. Dispositif selon la revendication 2 ou 3, caractérisé en ce que

le compartiment du lit bactérien (1) et le compartiment filtrant amont (2) se composent de deux colonnes placées côte à côte, qui sont reliées à la hauteur du plancher par une canalisation de liaison.

9. Dispositif selon l'une des revendications 2, 3 et 8, caractérisé en ce qu'

un compartiment de lit bactérien placé centralement est entouré d'une pluralité de colonnes filtrantes amont.

10. Dispositif selon l'une des revendications 2, 3 et 8 et 9, caractérisé en ce qu'

un réservoir de pression est associé aux colonnes filtrantes amont et qu'il est relié à celles-ci par l'intermédiaire d'une canalisation à la partie supérieure.

11. Dispositif selon l'une des revendications 2, 3, et 8 à 10, caractérisé en ce qu'

il est prévu une ouverture d'évacuation de boue au milieu du fond allant en se rétrécissant des colonnes filtrantes amont.

12. Dispositif selon l'une des revendications 2 à 11, caractérisé en ce qu'

à la partie supérieure du lit bactérien (1) est prévue une soupape de dégazage (18), qui s'ouvre par l'intermédiaire d'une minuterie, les vannes d'arrivée d'eau usée (5) et d'oxygène (8) étant fermées.

13. Dispositif selon l'une des revendications 2 à 12, caractérisé en ce qu'

un dispositif à minuterie ouvre par intervalles une vanne d'évacuation de boue (16) à la partie inférieure du lit bactérien (1).

14. Dispositif selon l'une des revendications 2 à 13, caractérisé en ce qu'

un interrupteur à pression est prévu pour l'ouverture de la soupape de dégazage (18).

15. Dispositif selon l'une des revendications 2 à 14, caractérisé en ce qu'

un bassin de collecte et de décantation, placé en amont, est un réservoir surélevé et que la pression statique d'alimentation, dont l'on dispose ainsi, correspond à la pression organique du dispositif.